(19) Europäisches Patentamt
European Patent Office
Office européen des brevets

(11) **EP 2 333 703 B1**

(12) **FASCICULE DE BREVET EUROPEEN**

(45) Date de publication et mention
de la délivrance du brevet:
**03.06.2020 Bulletin 2020/23**

(51) Int Cl.:
*G06K 19/073* (2006.01)　　*G06K 19/07* (2006.01)

(21) Numéro de dépôt: **10194680.4**

(22) Date de dépôt: **13.12.2010**

(54) **Composant électronique apte à détecter des attaques actives**

Elektronische Komponente zum Aufspüren von aktiven Angriffen

Electronic component capable of detecting active attacks

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2009 FR 0958940**

(43) Date de publication de la demande:
**15.06.2011 Bulletin 2011/24**

(73) Titulaire: **IDEMIA France**
**92400 Courbevoie (FR)**

(72) Inventeurs:
• **Morin, Nicolas**
**33400, Talence (FR)**
• **Thiebeauld de la Crouee, Hugues**
**33600, Pessac (FR)**

(74) Mandataire: **Cabinet Beau de Loménie**
**158, rue de l'Université**
**75340 Paris Cedex 07 (FR)**

(56) Documents cités:
**EP-A1- 1 804 199　　US-A1- 2005 045 731**

## Description

La présente invention se situe dans le domaine de la protection des composants électroniques.

Elle vise plus particulièrement, un composant électronique apte à détecter une attaque active.

Il est habituel de distinguer les attaques actives des actives passives.

On rappelle qu'une attaque passive est une attaque dans laquelle l'attaquant se contente d'observer l'activité du composant.

Au contraire, une attaque active est une attaque par injection de faute dans laquelle l'attaquant perturbe physiquement le composant pendant l'exécution d'algorithmes ou de commandes sensibles.

De telles perturbations se concrétisent au niveau du composant par un apport en énergie (lumineuse ou électromagnétique par exemple). Cet apport en énergie entraîne une augmentation de courant qui place le composant dans un état inattendu et fragilisé.

Il est connu d'évaluer la sécurité des cartes à puce en analysant leur comportement en réponse à injection de faute par énergie lumineuse par laser.

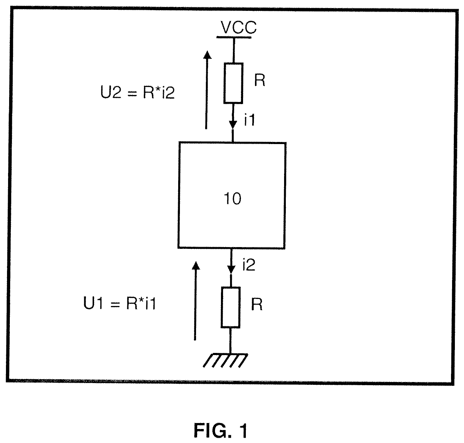

La figure 1 représente le principe d'une telle évaluation.

En référence à la figure 1, on place un composant 10 en série entre deux résistances de valeur R, une reliée à la masse et l'autre à une tension positive Vcc, puis on illumine le composant avec une impulsion laser.

Cet apport d'énergie entraîne un surplus de courant en amont (Vcc) et en aval (Gnd) du composant au moment de la perturbation lumineuse pendant la durée de la perturbation. Ce surplus de courant peut avoir deux raisons :

-    il peut être induit par l'impulsion lumineuse, celle-ci créant autant de trous que d'électrons ; les trous s'écoulent vers la tension positive Vcc et les électrons vers la masse, d'où un impact sur les courant i1 et i2 ;
-    il peut aussi être provoqué par des courts circuits dans le composant provoqués par l'impulsion lumineuse.

Aucune méthode n'est connue à ce jour pour détecter de telles attaques.

Le document EP 1 804 199 décrit une méthode pour détecter une attaque consistant à faire varier la tension positive Vcc. Malheureusement, cette méthode ne permet pas de détecter une attaque par apport d'énergie, du type de l'attaque laser décrite ci-dessus, celle-ci n'ayant aucun effet sur la tension Vcc.

### Objet et résumé de l'invention

L'invention vise un composant apte à détecter une attaque active selon la revendication 1 et un procédé de détection d'une attaque active selon la revendication 13.

D'une façon générale, l'invention vise à détecter toute hausse anormale de courant dans le composant.

L'invention peut par exemple être mise en œuvre en comparant une intensité représentative de l'intensité réellement consommée par le composant avec une intensité variable de référence, ajustable dynamiquement, et représentative d'une activité attendue du composant.

Dans un mode particulier de réalisation, le composant électronique selon l'invention comporte une unité logique apte à générer un courant électrique dont l'intensité est l'intensité variable de référence précitée.

Plus précisément, étant donné que lors d'une utilisation normale, la consommation du composant dépend largement de son activité pendant l'exécution d'une commande, l'invention propose d'effectuer un contrôle dynamique, en ajustant l'intensité de référence en fonction de l'activité attendue du composant à un instant donné.

Ainsi à chaque instant le composant selon l'invention contrôle si le niveau de consommation de courant ne dépasse pas un seuil, ce seuil variant de façon dynamique en fonction de l'activité de la puce. Si à un instant donné, le seuil est dépassé, cela signifiera que le composant subit une attaque par apport d'énergie et une alarme peut être déclenchée pour y réagir.

Dans un mode particulier de réalisation, le composant électronique comporte au moins un module et l'intensité de référence est représentative, à un instant donné, de la consommation maximum attendue des modules actifs à cet instant.

Dans un mode particulier de réalisation, l'unité logique comporte autant de résistances en parallèle que le composant comporte de modules, et chaque résistance est reliée à un unique module via un interrupteur et dimensionnée pour que le courant qui traverse cette résistance, lorsque ledit module est actif, représente la consommation maximum attendue de ce module à cet instant.

Dans un mode particulier de réalisation, le composant électronique comporte un processeur apte à positionner l'interrupteur associé à une résistance de l'unité logique en fonction du caractère actif ou inactif du module associé à cette résistance.

En variante, l'interrupteur peut être positionné par des moyens matériels.

Dans un mode particulier de réalisation, les moyens de comparaison sont constitués par un registre à deux états présentant une capacité d'entrée apte à se charger ou à se décharger selon que l'intensité représentative de l'intensité réellement consommée dépasse ou non l'intensité de référence.

Dans un mode particulier de réalisation de l'invention, l'intensité représentative de l'intensité réellement consommée est obtenue par un miroir de courant à partir de l'intensité réellement consommée.

Dans un mode particulier de réalisation de l'invention, l'intensité du courant miroir utilisé pour la détection est égale à l'intensité réellement consommée par le composant.

En variante, elle est inférieure et proportionnelle à l'intensité réellement consommée par le composant, ce qui permet d'utiliser une intensité plus faible pour la détection de faute, afin de limiter le courant consommé par le miroir de courant.

Dans un autre mode de réalisation de l'invention, la grandeur physique prise en compte pour qualifier l'activité attendue et réelle du composant est une tension.

Ainsi, dans un mode particulier de réalisation, le composant électronique selon l'invention comporte des moyens d'obtention d'une tension, dite de référence, ajustable dynamiquement et représentative de l'activité attendue du composant, et des moyens de comparaison aptes à comparer cette tension de référence avec une tension représentative de la consommation réelle du composant.

L'invention vise aussi une carte à puce (ou carte à microcircuit) conforme à la norme ISO-7816 comportant un microcontrôleur constitué par un composant électronique tel que mentionné ci-dessus.

Dans un mode particulier de réalisation, les différentes étapes du procédé de protection mentionné ci-dessus sont déterminées par des instructions de programme d'ordinateur.

En conséquence, l'invention vise aussi un programme d'ordinateur sur un support d'informations, ce programme étant susceptible d'être mis en œuvre dans une carte à microcircuit, ce programme comportant des instructions adaptées à la mise en œuvre des étapes du premier procédé de protection tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 déjà décrite illustre une attaque active pouvant être détectée par l'invention ; et
- les figures 2 à 4 représentent trois composants électroniques conformes à des modes particuliers de réalisation de l'invention.

Description détaillée d'un premier mode de réalisation

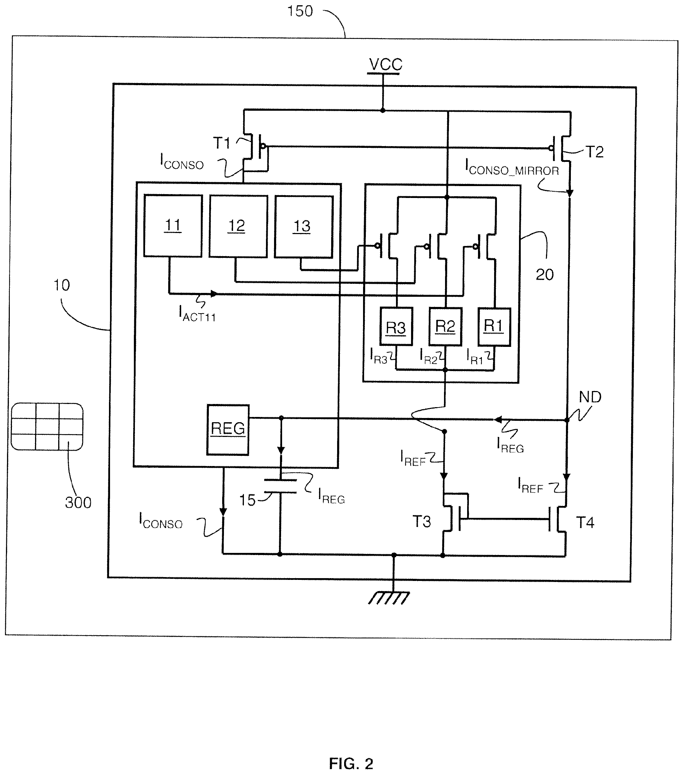

La figure 2 représente une carte à puce 150 conforme à l'invention.

Cette carte à puce 150 est conforme à la norme ISO 7816. Elle comporte un composant électronique 10 conforme à un premier mode de réalisation de l'invention.

La carte à microcircuit 150 ou plus précisément le composant électronique 10 qu'il incorpore peut échanger des données avec une entité extérieure à la carte au moyen d'une interface de communication 300 réalisée sous forme de contacts. Dans ce mode de réalisation l'invention est mise en œuvre par des moyens matériels.

Dans cet exemple, le composant électronique 10 comporte trois modules 11, 12, 13.

Conformément à l'invention, le composant électronique 10 comporte une unité logique 20 apte à générer un courant électrique d'intensité variable dite de référence, $I_{REF}$.

Dans cet exemple de réalisation, l'unité logique 20 comporte trois résistances R1, R2, R3 en parallèle. Chacune de ces résistances comporte une borne reliée à une alimentation positive Vcc via un interrupteur PMOS et une borne reliée à la masse.

Dans cet exemple de réalisation, chacune des résistances R1 à R3 peut être connectée ou non à l'un desdits modules 11 à 13 par un interrupteur, par exemple de type PMOS, l'interrupteur étant fermé lorsque le module concerné est actif et ouvert dans le cas contraire.

Plus précisément, lorsque le module 11 (par exemple) devient actif, il génère un signal d'activité $I_{ACT11}$ qui entraîne la fermeture de l'interrupteur PMOS relié au module 11 et un courant électrique traverse la résistance R1, dont l'intensité $I_{R1}$ est égale à (Vcc - 0)/R1.

Dans cet exemple de réalisation de l'invention, la résistance R1 est dimensionnée de sorte que l'intensité $I_{R1}$ correspond à la consommation maximum du module 11. De même, les résistances R2 et R3 sont dimensionnées pour que les intensités $I_{R2}$ et $I_{R3}$ qui les traversent, en cas d'activité des modules 12 et 13, correspondent à la consommation maximum de ces modules.

L'intensité variable de référence $I_{REF}$ correspond donc, à un instant donné, à la consommation maximum des modules 11 à 13 actifs.

On appelle $I_{CONSO}$ l'intensité réellement consommée par le composant électronique 10.

Dans l'exemple de réalisation décrit ici, le composant électronique 10 comporte :

- un premier miroir de courant composé de deux transistors PMOS T1, T2 apte à recopier le courant $I_{CONSO}$ traversant la branche du transistor T1 effectivement consommé par le composant électronique 10, dans la branche du transistor T2 ;
- un deuxième miroir de courant composé de deux transistors NMOS T3, T4 apte à recopier le courant $I_{REF}$ traversant l'unité logique 20, dans la branche du transistor T4. Dans cet exemple, les transistors NMOS T3 et T4 sont de même taille.

Dans l'exemple de réalisation décrit ici, le composant électronique 10 comporte un nœud ND avec :

- une branche d'entrée comportant le transistor T2, sur laquelle circule un courant d'intensité $I_{CONSO\_MIRROR}$ ;
- une première branche de sortie comportant le transistor T4, sur laquelle circule un courant d'intensité $I_{REF}$ ; et
- une deuxième branche de sortie reliée à l'électrode du condensateur 15 d'entrée du registre REG, sur laquelle circule un courant d'intensité $I_{REG}$.

Par application de la loi des nœuds au nœud ND, on obtient :

$$I_{REG} = I_{CONSO\_MIRROR} - I_{REF}$$

Bien entendu, lorsque les transistors T1 et T2 sont identiques, on obtient :

$$I_{REG} = I_{CONSO} - I_{REF}$$

Mais les transistors T1 et T2 peuvent aussi être choisis différents. Par exemple, afin de ne pas trop augmenter la consommation, on peut choisir T2 dix fois plus petit que T1. Dans ce cas, les résistances seront choisies de valeurs 10 fois plus élevées pour que les courants $I_{REF}$ et $I_{CONSO\_MIRROR}$ soient comparables.

Dans l'exemple de réalisation décrit ici, le composant 10 comporte un registre REG apte à stocker une valeur binaire, cette valeur dépendant du caractère chargé/déchargé du condensateur 15.

En régime normal, l'intensité $I_{REG}$ est négative, l'intensité variable de référence $I_{REF}$ ayant été choisie pour correspondre à la consommation maximum des modules 11 à 13 actifs ; le condensateur 15 se décharge et le registre REG est au niveau bas.

Au contraire, lorsque le composant électronique 10 est l'objet d'une attaque active induisant un apport d'un surplus de courant au niveau du composant, la consommation réelle de ce composant dépasse la consommation de référence et $I_{REG}$ est positive ; le condensateur 15 se charge et le registre REG est au niveau haut.

Par conséquent, la lecture du niveau du registre REG permet de comparer l'intensité de référence $I_{REF}$ avec l'intensité $I_{CONSO}$ réellement consommée par le composant 10.

Dans le mode de réalisation décrit ici, la valeur de sortie du registre REG peut générer un signal d'alarme pour le traitement de l'attaque ainsi détectée.

## Description détaillée d'un deuxième mode de réalisation

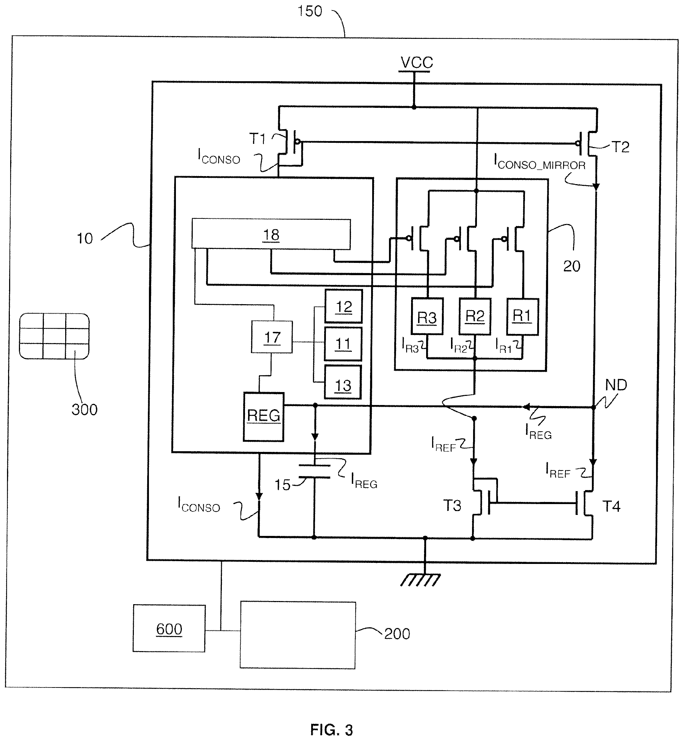

La figure 3 représente une carte à puce 150 conforme à un deuxième mode de réalisation de l'invention.

Dans ce mode de réalisation, l'invention est mise partiellement en oeuvre par des moyens logiciels. Le composant électronique 10 comporte un processeur 17 apte à activer/désactiver chacun des modules 11 à 13.

Dans ce mode de réalisation, le composant électronique 10 est associé d'une part à une mémoire vive 600, et d'autre part à une mémoire non volatile 200 (par exemple du type EEPROM) par des bus. La mémoire non volatile 200 de la carte à microcircuit 150 constitue un support d'informations conforme à l'invention. Elle comporte un programme d'ordinateur PG40 conforme à l'invention, ce programme comportant des instructions apte à mettre en œuvre un procédé de protection conforme à l'invention.

Dans ce mode de réalisation, le composant électronique 10 comporte un module de configuration 18 comportant un bit de configuration associé à chacun des modules 11 à 13.

La valeur du bit associé à un module est positionnée par le processeur 17 en fonction du caractère actif/non actif de ce module.

Dans cet exemple de réalisation, l'interrupteur PMOS associé à chacune des résistances R1 à R3 est ouvert ou fermé en fonction de la valeur du bit associé au module correspondant à cette résistance.

Dans ce mode de réalisation, le processeur 17 surveille l'état du registre REG et déclenche un signal lorsque cet état passe au deuxième niveau.

## Description détaillée d'un troisième mode de réalisation

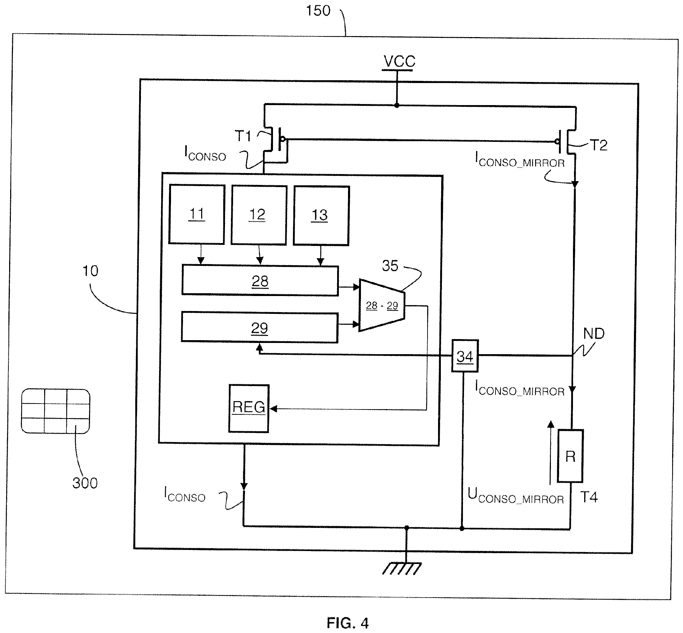

La figure 4 représente une carte à puce 150 conforme à un troisième mode de réalisation de l'invention.

Dans ce mode de réalisation, le composant électronique 10 comporte un nœud ND avec :

- une branche d'entrée comportant le transistor T2, sur laquelle circule un courant d'intensité $I_{CONSO\_MIRROR}$ ;
- une première branche de sortie comportant une résistance R et sur laquelle circule un courant d'intensité $I_{CONSO\_MIRROR}$ ; et
- une deuxième branche de sortie reliée à l'entrée d'un convertisseur analogique numérique 34 et sur laquelle circule un courant d'intensité nulle.

La tension aux bornes de la résistance R est obtenue par la loi d'Ohm :

$$U_{CONSO\_MIRROR} = R * I_{CONSO\_MIRROR}$$

Dans le mode de réalisation décrit ici, le composant électronique 10 comporte un registre 29 comportant la valeur numérique de la tension $U_{CONSO\_MIRROR}$, représentative de la consommation réelle du composant électronique 10.

Dans le mode de réalisation, le composant électronique 10 comporte un registre 28 comportant une valeur représentative de la tension attendue aux bornes du composant électronique 10 en fonction de l'activité de chacun des modules 11 à 13. Ce registre peut par exemple être configuré directement par les modules.

Dans le mode de réalisation décrit ici, le composant électronique 10 comporte un soustracteur 35 apte à soustraire le contenu des registres 28 et 29, le signal de retenue étant connecté au registre REG.

A un instant donné, la valeur du registre REG est par conséquent égale à 1 si la consommation réelle du composant 10 dépasse la consommation attendue cet instant ; le signal d'alarme passe alors au deuxième niveau.

Dans chacun des trois modes de réalisation précédemment décrits, différentes actions peuvent être entreprises lorsque le signal d'alarme passe au deuxième niveau, représentatif d'une attaque active. On peut par exemple :

- effacer les clefs cryptographiques mémorisées dans une mémoire non volatile de la carte à puce 150 ;
- effacer tout ou partie d'une mémoire non volatile de la carte à puce 150 ;
- positionner un drapeau logiciel (en anglais « flag ») à 1, ce drapeau étant lu à chaque mise sous tension de la carte à puce 150, la détection de la valeur 1 inhibant toute utilisation de la carte à puce.

**Revendications**

1. Composant électronique (10) apte à détecter une attaque active comportant :

    - des moyens (20) d'obtention d'une grandeur physique ($I_{REF}$, $U_{REF}$), dite de référence, ajustable dynamiquement et représentative de l'activité attendue dudit composant (10), la grandeur physique étant une intensité ou une tension ;
    - des moyens de comparaison (REG, 17) aptes à comparer ladite grandeur de référence ($I_{REF}$, $U_{REF}$) avec une grandeur de même type ($I_{CONSO\_MIRROR}$, $I_{CONSO}$, $U_{CONSO\_MIRROR}$) représentative de l'activité réelle dudit composant ; et
    - des moyens aptes à détecter, en fonction du résultat de ladite comparaison, une attaque par apport d'énergie induisant un apport d'un surplus de courant en amont (Vcc) et en aval (Gnd) du composant.

2. Composant électronique (10) selon la revendication 1 **caractérisé en ce qu'**il comporte des moyens de comparaison (REG, 17) aptes à comparer une intensité ($I_{CONSO\_MIRROR}$, $I_{CONSO}$) représentative de l'intensité réellement consommée ($I_{CONSO}$) par ledit composant avec une intensité variable de référence ($I_{REF}$) ajustable dynamiquement pour représenter l'activité attendue dudit composant.

3. Composant électronique (10) selon la revendication 2 **caractérisé en ce qu'**il comporte une unité logique (20) apte à générer un courant électrique dont l'intensité est ladite intensité variable de référence ($I_{REF}$).

4. Composant électronique selon la revendication 2 ou 3, **caractérisé en ce qu'**il comporte au moins un module (11, 12, 13), ladite intensité de référence ($I_{REF}$) étant représentative, à un instant donné, de la consommation maximum attendue des modules actifs à cet instant.

5. Composant électronique selon la revendication 4, **caractérisé en ce que** ladite unité logique (20) comporte autant de résistances (R1, R2, R3) en parallèle que le composant comporte de dits modules, chaque résistance étant reliée à un unique desdits modules via un interrupteur et dimensionnée pour que le courant qui traverse cette résistance, lorsque ledit module est actif, représente la consommation maximum attendue dudit module à cet instant.

6. Composant électronique selon la revendication 5, **caractérisé en ce qu'**il comporte un processeur apte à positionner ledit interrupteur en fonction du caractère actif ou inactif dudit module.

7. Composant électronique selon l'une quelconque des revendications 2 à 6, **caractérisé en ce que** lesdits moyens de comparaison sont constitués par un registre (REG) présentant une capacité d'entrée (15) apte à se charger ou à se décharger selon que ladite intensité ($I_{CONSO\_MIRROR}$, $I_{CONSO}$) représentative de l'intensité réellement consommée ($I_{CONSO}$) dépasse ou non ladite intensité de référence.

8. Composant électronique selon l'une quelconque des revendications 2 à 7, **caractérisé en ce que** ladite intensité ($I_{CONSO\_MIRROR}$, $I_{CONSO}$) représentative de l'intensité réellement consommée ($I_{CONSO}$) est obtenue par un miroir de courant à partir de ladite intensité réellement consommée ($I_{CONSO}$).

9. Composant électronique (10) selon la revendication 1 **caractérisé en ce qu'**il comporte :

   - des moyens (20) d'obtention d'une tension ($U_{REF}$), dite de référence, ajustable dynamiquement et représentative de l'activité attendue dudit composant (10) ; et **en ce que**
   - lesdits moyens de comparaison (REG, 17) sont aptes à comparer ladite tension de référence ($U_{REF}$) avec une tension ($U_{CONSO\_MIRROR}$) représentative de la consommation réelle dudit composant.

10. Composant électronique (10) selon la revendication 9, **caractérisé en ce qu'**il comporte au moins un module (11, 12, 13) et un registre (28) comportant une valeur représentative de la tension attendue aux bornes dudit composant (10) en fonction de l'activité de chacun desdits (11, 12, 13).

11. Composant électronique (10) selon la revendication 9 ou 10 **caractérisé en ce qu'**il comporte :

    - une résistance (R) en parallèle avec ledit composant (10) traversée par un courant dont l'intensité ($I_{CONSO\_MIRROR}$) est représentative de l'intensité réellement consommée ($I_{CONSO}$) par ledit composant ; et
    - un registre (29) comportant la valeur numérique de la tension ($U_{CONSO\_MIRROR}$) aux bornes de ladite résistance (R) et représentative de la consommation réelle dudit composant (10).

12. Carte à puce (150) conforme à la norme ISO 7816 comportant un microcontrôleur (10) constitué par un composant électronique selon l'une quelconque des revendications 1 à 11.

13. Procédé de détection d'une attaque active d'un composant électronique (10) comportant :

    - une étape d'obtention d'une grandeur physique ($I_{REF}$, $U_{REF}$), dite de référence, ajustable dynamiquement et représentative de l'activité attendue dudit composant (10), la grandeur physique étant une intensité ou une tension ;

    - une étape de comparaison (REG, 17) de ladite grandeur de référence ($I_{REF}$, $U_{REF}$) avec une grandeur de même type ($I_{CONSO\_MIRROR}$, $I_{CONSO}$, $U_{CONSO\_MIRROR}$) représentative de l'activité réelle dudit composant ; et
    - une étape de détection, en fonction du résultat de ladite étape de comparaison, d'une attaque par apport d'énergie induisant un apport d'un surplus de courant en amont (Vcc) et en aval (Gnd) du composant.

14. Programme d'ordinateur comportant des instructions pour l'exécution des étapes du procédé de protection selon la revendication 13 lorsque ledit programme est exécuté par un ordinateur.

15. Support d'enregistrement lisible par un ordinateur sur lequel est enregistré un programme d'ordinateur comprenant des instructions pour l'exécution des étapes du procédé de protection selon la revendication 13.

**Patentansprüche**

1. Elektronisches Bauelement (10), das geeignet ist, einen aktiven Angriff zu erkennen, umfassend:

   - Mittel (20) zum Erhalten einer physikalischen, sogenannten Referenzgröße ($I_{REF}$, $U_{REF}$), die dynamisch einstellbar und für die erwartete Aktivität des Bauelements (10) repräsentativ ist, wobei die physikalische Größe eine Stärke oder eine Spannung ist,
   - Vergleichsmittel (REG, 17), die geeignet sind, die Referenzgröße ($I_{REF}$, $U_{REF}$) mit einer Größe des gleichen Typs ($I_{CONSO\_MIRROR}$, $I_{CONSO}$, $U_{CONSO\_MIRROR}$), welche für die tatsächliche Aktivität des Bauelements repräsentativ ist, zu vergleichen, und
   - Mittel, die geeignet sind, in Abhängigkeit von dem Ergebnis des Vergleichs einen Angriff durch Energiezufuhr, die eine Zufuhr eines Stromüberschusses stromaufwärts (Vcc) und stromabwärts (Gnd) des Bauelements bewirkt, zu erkennen.

2. Elektronisches Bauelement (10) nach Anspruch 1, **dadurch gekennzeichnet, dass** es Vergleichsmittel (REG, 17) umfasst, die geeignet sind, eine Stärke ($I_{CONSO\_MIRROR}$, $I_{CONSO}$), welche für die durch das Bauelement tatsächlich verbrauchte Stärke ($I_{CONSO}$) repräsentativ ist, mit einer variablen Referenzstärke ($I_{REF}$), welche dynamisch einstellbar ist, um die erwartete Aktivität des Bauelements darzustellen, zu vergleichen.

3. Elektronisches Bauelement (10) nach Anspruch 2, **dadurch gekennzeichnet, dass** es eine Logikeinheit (20) umfasst, die geeignet ist, einen elektrischen Strom zu erzeugen, dessen Stärke die variable Referenzstärke ($I_{REF}$) ist.

4. Elektronisches Bauelement nach Anspruch 2 oder 3, **dadurch gekennzeichnet, dass** es wenigstens ein Modul (11, 12, 13) umfasst, wobei die Referenzstärke ($I_{REF}$) zu einem gegebenen Zeitpunkt für den erwarteten maximalen Verbrauch der aktiven Module zu diesem Zeitpunkt repräsentativ ist.

5. Elektronisches Bauelement nach Anspruch 4, **dadurch gekennzeichnet, dass** die Logikeinheit (20) so viele parallel geschaltete Widerstände (R1, R2, R3) umfasst, wie das Bauelement Module umfasst, wobei jeder Widerstand über einen Schalter mit einem einzigen der Module verbunden und so dimensioniert ist, dass der Strom, welcher durch diesen Widerstand fließt, wenn das Modul aktiv ist, den erwarteten maximalen Verbrauch des Moduls zu diesem Zeitpunkt darstellt.

6. Elektronisches Bauelement nach Anspruch 5, **dadurch gekennzeichnet, dass** es einen Prozessor umfasst, der geeignet ist, den Schalter in Abhängigkeit von der aktiven oder inaktiven Eigenschaft des Moduls zu positionieren.

7. Elektronisches Bauelement nach einem der Ansprüche 2 bis 6, **dadurch gekennzeichnet, dass** die Vergleichsmittel durch ein Register (REG) gebildet sind, welches eine Eingangskapazität (15) aufweist, die geeignet ist, geladen zu werden oder sich zu entladen, je nachdem, ob die Stärke ($I_{CONSO\_MIRROR}$, $I_{CONSO}$), welche für die tatsächlich verbrauchte Stärke ($I_{CONSO}$) repräsentativ ist, die Referenzstärke überschreitet oder nicht.

8. Elektronisches Bauelement nach einem der Ansprüche 2 bis 7, **dadurch gekennzeichnet, dass** die Stärke ($I_{CONSO\_MIRROR}$, $I_{CONSO}$), welche für die tatsächlich verbrauchte Stärke ($I_{CONSO}$) repräsentativ ist, durch einen Stromspiegel aus der tatsächlich verbrauchten Stärke ($I_{CONSO}$) erhalten wird.

9. Elektronisches Bauelement (10) nach Anspruch 1, **dadurch gekennzeichnet, dass** es umfasst:

- Mittel (20) zum Erhalten einer sogenannten Referenzspannung ($U_{REF}$), die dynamisch einstellbar ist und für die erwartete Aktivität des Bauelements (10) repräsentativ ist, und dass
- die Vergleichsmittel (REG, 17) geeignet sind, die Referenzspannung ($U_{REF}$) mit einer Spannung ($U_{CONSO\_MIRROR}$), welche für den tatsächlichen Verbrauch des Bauelements repräsentativ ist, zu vergleichen.

10. Elektronisches Bauelement (10) nach Anspruch 9, **dadurch gekennzeichnet, dass** es wenigstens ein Modul (11, 12, 13) und ein Register (28) umfasst, das einen Wert enthält, der für die an den Anschlüssen des Bauelements (10) in Abhängigkeit von der Aktivität eines jeden der Module (11, 12, 13) erwartete Spannung repräsentativ ist.

11. Elektronisches Bauelement (10) nach Anspruch 9 oder 10, **dadurch gekennzeichnet, dass** es umfasst:

- einen zu dem Bauelement (10) parallel geschalteten Widerstand (R), der von einem Strom durchflossen wird, dessen Stärke ($I_{CONSO\_MIRROR}$) für die tatsächlich durch das Bauelement verbrauchte Stärke ($I_{CONSO}$) repräsentativ ist, und
- ein Register (29), das den digitalen Wert der Spannung ($U_{CONSO\_MIRROR}$) an den Anschlüssen des Widerstands (R) enthält, der für den tatsächlichen Verbrauch des Bauelements (10) repräsentativ ist.

12. Chipkarte (150) gemäß der Norm ISO 7816, die einen Mikrocontroller (10) umfasst, welcher durch ein elektronisches Bauelement nach einem der Ansprüche 1 bis 11 gebildet ist.

13. Verfahren zum Erkennen eines aktiven Angriffs auf ein elektronisches Bauelement (10), umfassend:

- einen Schritt zum Erhalten einer physikalischen, sogenannten Referenzgröße ($I_{REF}$, $U_{REF}$), die dynamisch einstellbar und für die erwartete Aktivität des Bauelements (10) repräsentativ ist, wobei die physikalische Größe eine Stärke oder eine Spannung ist,
- einen Schritt zum Vergleichen (REG, 17) der Referenzgröße ($I_{REF}$, $U_{REF}$) mit einer Größe des gleichen Typs ($I_{CONSO\_MIRROR}$, $I_{CONSO}$, $U_{CONSO\_MIRROR}$), welche für die tatsächliche Aktivität des Bauelements repräsentativ ist, und
- einen Schritt des Erkennens, in Abhängigkeit von dem Ergebnis des Vergleichsschrittes, eines Angriffs durch Energiezufuhr, die eine Zufuhr eines Stromüberschusses stromaufwärts (Vcc) und stromabwärts (Gnd) des Bauelements bewirkt.

14. Computerprogramm, umfassend Befehle für die Durchführung der Schritte des Schutzverfahrens nach Anspruch 13, wenn das Programm durch einen Computer ausgeführt wird.

15. Durch einen Computer lesbarer Aufzeichnungsträger, auf dem ein Computerprogramm gespeichert ist, das Befehle für die Durchführung der Schritte des Schutzverfahrens nach Anspruch 13 umfasst.

**Claims**

1. An electronic component (10) able to detect an active attack comprising:

   • reference-obtaining means (20) for obtaining a physical magnitude ($I_{REF}$, $U_{REF}$) referred to as a reference magnitude, which magnitude is dynamically adjustable and representative of the expected activity of said component (10), the physical magnitude being an intensity or a voltage;
   • comparator means (REG, 17) suitable for comparing said reference magnitude ($I_{REF}$, $U_{REF}$) with a magnitude of the same type ($I_{CONSO\_MIRROR}$, $I_{CONS}$, $U_{CONSO-MIRROR}$) representative of the real activity of said component; and
   • detector means suitable for detecting, as a function of the result of said comparison, an attack by delivery of energy causing surplus current to be delivered upstream (Vcc) and downstream (Gnd) of the component.

2. An electronic component (10) according to claim 1, **characterized in that** it includes comparator means (REG, 17) suitable for comparing a current ($I_{CON\_MIRROR}$, $I_{CONS}$) representative of the current actually consumed ($I_{CONS}$) by said component with a variable reference current ($I_{REF}$) that is dynamically adjustable to represent the activity expected of said component.

3. An electronic component (10) according to claim 2, **characterized in that** it includes a logic unit (20) suitable for generating an electric current of magnitude that is equal to said variable reference current ($I_{REF}$).

4. An electronic component according to claim 2 or claim 3, **characterized in that** it includes at least one module (11, 12, 13), said reference current ($I_{REF}$) being representative, at a given instant, of the maximum expected consumption of the modules active at that instant.

5. An electronic component according to claim 4, **characterized in that** said logic unit (20) has as many resistors (R1, R2, R3) in parallel as the component has said modules, each resistor being connected to one of said modules via a switch and being dimensioned so that the current that flows through said resistor, when said module is active, represents the expected maximum consumption of said module at that instant.

6. An electronic component according to claim 5, **characterized in that** it includes a processor suitable for setting said switch as a function of the active or inactive character of said module.

7. An electronic component according to any one of claims 2 to 6, **characterized in that** said comparator means are constituted by a register (REG) presenting an input capacitor (15) suitable for being charged or for discharging depending on whether said current ($I_{CONSO\_MIRROR}$, $I_{CONS}$) representative of the current actually consumed ($I_{CONS}$) exceeds or does not exceed said reference current.

8. An electronic component according to any one of claims 2 to 7, **characterized in that** said current ($I_{CONSO\_MIRROR}$, $I_{CONS}$) representative of the current actually consumed ($I_{CONS}$) is obtained by a current mirror from said current ($I_{CONS}$) that is actually consumed.

9. An electronic component (10) according to claim 1, **characterized in that** it includes:

   • means (20) for obtaining a "reference" voltage ($U_{REF}$) that is dynamically adjustable and that is representative of the expected activity of said component (10); and **in that**
   • said comparator means (REG, 17) are suitable for comparing said reference voltage ($U_{REF}$) with a voltage ($U_{CONSO\_MIRROR}$) representative of the actual consumption of said component.

10. An electronic component (10) according to claim 9, **characterized in that** it includes at least one module (11, 12, 13) and a register (28) containing a value representative of the voltage expected across the terminals of said component (10) as a function of the activity of each of said modules (11, 12, 13).

11. An electronic component (10) according to claim 9 or claim 10, **characterized in that** it includes:

   • a resistor (R) in parallel with said component (10) conveying a current of magnitude ($I_{CONSO\_MIRROR}$) that is representative of the current ($I_{CONS}$) actually consumed by said component; and
   • a register (29) containing the digital value of the voltage ($U_{CONSO\_MIRROR}$) across the terminals of said resistor (R) and representative of the actual consumption of said component (10).

12. A smart card (150) in compliance with the ISO 7816 standard, the card including a microcontroller (10) constituted by an electronic component according to any one of claims 1 to 11.

**13.** A method for detecting an active attack of an electronic component (10), the method comprising:

> • a reference-obtaining step of obtaining a "reference" physical magnitude ($I_{REF}$, $U_{REF}$) that is dynamically adjustable as representative of the expected activity of said component (10), the physical magnitude being an intensity or a voltage;
> • a comparison step of comparing (REG, 17) said reference magnitude ($I_{REF}$, $U_{REF}$) with a magnitude of the same type ($I_{CONSO\_MIRROR}$, $I_{CONS}$, $U_{CONSO\_MIRROR}$) representative of the actual activity of said component; and
> • a detection step of detecting, as a function of the result of said comparison step, an attack by delivery of energy causing surplus current to be delivered downstream (Gnd) and upstream (Vcc) of the component the component.

**14.** A computer program including instructions for executing the steps of the protection method according to claim 13 when said program is executed by a computer.

**15.** A recording medium readable by a computer having recorded thereon a computer program including instructions for executing the steps of the protection method according to claim 13.

VCC

U2 = R*i2

R

i1

10

i2

U1 = R*i1

R

**FIG. 1**

**FIG. 2**

FIG. 3

FIG. 4

**EP 2 333 703 B1**

## RÉFÉRENCES CITÉES DANS LA DESCRIPTION

**Documents brevets cités dans la description**

- EP 1804199 A